# EUROPÄISCHE PATENTSCHRIFT

(11) **EP 3 452 204 B1**
(45) Veröffentlichungstag und Bekanntmachung des Hinweises auf die Patenterteilung: **05.01.2022**
(21) Anmeldenummer: 17709935.5
(22) Anmeldetag: 07.03.2017
(51) Int. Cl.: B01D 46/24

(54) **RINGFÖRMIGES FILTERELEMENT, INSBESONDERE ZUR GASFILTRATION, UND FILTEREINRICHTUNG**
ANNULAR FILTER ELEMENT, IN PARTICULAR FOR GAS FILTRATION, AND FILTER DEVICE
ÉLÉMENT FILTRANT ANNULAIRE, EN PARTICULIER POUR LA FILTRATION DE GAZ, ET DISPOSITIF DE FILTRATION

(30) Priorität: 03.05.2016 DE 102016005355
(43) Veröffentlichungstag der Anmeldung: 13.03.2019
(73) Patentinhaber: MANN+HUMMEL GmbH, 71636 Ludwigsburg (DE)
(72) Erfinder: DONAUER, Nadine, 70736 Fellbach (DE); PEREIRA MADEIRA, Pedro Miguel, 74321 Bietigheim-Bissingen (DE)
(74) Vertreter: Mann + Hummel Intellectual Property
(86) Internationale Anmeldenummer: PCT/EP2017/055257
(87) Internationale Veröffentlichungsnummer: WO 2017/190871

(56) Entgegenhaltungen:
- JP-A- H08 252 417
- JP-U- S58 106 553
- US-A- 3 147 100
- US-A1- 2014 157 741

## Beschreibung

### Technisches Gebiet

Die Erfindung bezieht sich auf eine Filtereinrichtung mit einem ringförmigen Filterelement nach dem Oberbegriff des Anspruchs 1 sowie auf eine Verwendung eines Filterelements.

### Stand der Technik

In der DE 10 2007 017 091 A1 wird ein Ringfilterelement für einen Luftfilter eines Verbrennungsmotors beschrieben, der einen ringförmigen, von der Luft radial von außen nach innen zu durchströmenden Filtermediumkörper aufweist, welcher an seinen axialen Stirnseiten von einer Endscheibe abgedeckt ist. Der Innenraum im Filtermediumkörper ist von einem Mittelrohr ausgekleidet, das Streben in Achs- und in Umfangsrichtung aufweist und zur Stabilisierung des Filterelements beiträgt. An einer Stirnseite weist das Mittelrohr einen auf der Endscheibe aufliegenden, sich radial nach außen erstreckenden Stützkragen auf. Der Stützkragen überragt die Endscheibe axial und ist von einem Dichtungsmaterial ummantelt. An der axialen Stirnseite des Stützkragens läuft eine Stützstrebe in Umfangsrichtung um, die axiale Dichtkräfte, welche von einem aufgesetzten Deckel ausgeübt werden, aufnimmt und über radial abgekröpfte Streben in das Mittelrohr einleitet.

Aus US 2014/157741 A1 ist eine Filtereinrichtung mit einem ringförmigen Filterelement bekannt, das einen mit dem Mittelrohr ausgebildeten Stützkragen aufweist. Im Einbauzustand des Filterelements hat der Stützkragen bezüglich des Gehäusebauteils ein axiales Spiel und stützt sich nicht am Gehäuse ab. Eine axiale Elementabstützung wird dort durch einen separat von dem Stützkragen ausgebildeten, radial versetzt vorliegenden Ringbund einer Endscheibe des Filterelements realisiert.

Ferner ist aus JP H08 252417 A eine Filtereinrichtung mit einem ringförmigen Filterelement bekannt, das im Bereich seiner offenen Endscheibe ein über das Ende des Filterbalgs hinaus verlängertes Mittelrohr aufweist, an dessen Ende ein nach radial innen gerichteter Bund vorliegt. An dem radial nach innen gerichteten Bund findet eine Abstützung des Filterelements gegenüber dem Gehäuse sowie eine radiale Abdichtung gegenüber dem Gehäuse statt.

Schließlich offenbart US 3 147 100 A eine weitere Filtereinrichtung, die ein ringförmiges Filterelement aufweist, welches ein über das axiale Ende des Filterbalgs hinaus verlängertes Mittelrohr aufweist, wobei das Mittelrohr im Bereich des axialen Endes von einem Endscheibenmaterial umschlossen ist, das auch zur Dichtung gegenüber dem Gehäuse eingesetzt wird.

### Offenbarung der Erfindung

Der Erfindung liegt die Aufgabe zugrunde, eine Filtereinrichtung mit einem ringförmigen Filterelement mit einfachen konstruktiven Maßnahmen in der Weise auszubilden, dass über einen langen Betriebszeitraum im Bereich der Stirnseite des Filterelements Dichtigkeit zwischen Roh- und Reinseite gewährleistet ist.

Diese Aufgabe wird erfindungsgemäß von einer Filtereinrichtung mit den Merkmalen des Anspruches 1 gelöst. Die Aufgabe wird weiterhin von einer Verwendung gemäß Anspruch 11 gelöst. Die Unteransprüche geben zweckmäßige Weiterbildungen an.

Die erfindungsgemäße Filtereinrichtung hat ein ringförmig geschlossen ausgebildetes Filterelement, das radial von dem zu reinigenden Fluid durchströmt wird. Der Grundquerschnitt des Filterelements kann kreisförmig oder oval, ggf. in Form eines langgestreckten Ovals oder in Form von zwei Halbkreisen, die über geradlinige oder konvex gekrümmte Abschnitte verbunden sind, ausgebildet sein. Das ringförmige Filterelement schließt einen Innenraum ein, der von einem ein Stützgerüst bildenden Mittelrohr ausgekleidet ist, das sich an der den Innenraum begrenzenden Wandseite eines Filtermediumkörpers des Filterelements befindet. Das Mittelrohr weist Strömungsöffnungen für die Durchströmung des zu reinigenden Fluids auf und besteht insbesondere aus axialen Streben sowie Umfangsstreben, zwischen denen die Strömungsöffnungen gebildet sind. Die Durchströmung des Filtermediumkörpers, an dem die Filtration stattfindet, erfolgt vorzugsweise radial von außen nach innen, so dass der Innenraum die Reinseite bildet.

Das ringförmige Filterelement wird vorzugsweise zur Gasfiltration, insbesondere als Luftfilter für Brennkraftmaschinen, insbesondere von Kraft- oder Nutzfahrzeugen, eingesetzt. Es kommt aber auch ein Einsatz zur Filtration von Flüssigkeiten in Betracht.

Mit dem Mittelrohr ist ein Stützkragen verbunden, der zumindest teilweise von einem Dichtungselement bedeckt ist. Der Stützkragen befindet sich an einer axialen Stirnseite des Mittelrohrs und ragt vorteilhafterweise axial über die Stirnseite des Filtermediumkörpers hinaus. Der Stützkragen dient einerseits zur Aufnahme axialer Kräfte, welche im Betrieb auf das Filterelement einwirken, und andererseits zur strömungsdichten Separierung der Roh- von der Reinseite im Bereich der Stirnseite des Filterelements.

Bei dem ringförmigen Filterelement sind die Abstützfläche für das Gehäusebauteil, auf welches das Filterelement aufgesetzt wird, und die Dichtfläche zur Abdichtung beabstandet zueinander am Stützkragen angeordnet. Die Abstützfläche ist von der Stirnseite des Stützkragens gebildet, die über den Filtermediumkörper axial hinausragt. An dieser Stirnseite liegt das Gehäusebauteil an, die Axialkräfte, die vom Gehäusebauteil ausgeübt werden, werden über den Stützkragen in das Mittelrohr des Filterelements eingeleitet, so dass der Filtermediumkörper einschließlich der Endscheibe am Filtermediumkörper von den axialen Stützkräften entlastet ist.

Die Dichtfläche ist von einer nach radial innen oder außen weisenden Seitenfläche des Stützkragens gebildet. Vorzugsweise weist die die Dichtfläche bildende Seitenfläche nach radial innen. An dieser radialen Seitenfläche des Stützkragens befindet sich auch Dichtungsmaterial des Dichtungselements und liegt ein weiterer Abschnitt des Gehäusebauteils an. Axialkräfte werden an der Dichtfläche des Stützkragens nicht übertragen; die Übertragung der Axialkräfte erfolgt ausschließlich oder weitgehend über die Abstützfläche an der Stirnseite des Stützkragens. Man erhält auf diese Weise eine Entkopplung von axialer Abstützung und radialer Abdichtung zwischen dem Filterelement und dem Gehäusebauteil, beispielsweise einem Auslassstutzen für gereinigtes Fluid. Da die Dichtfläche von axialen Stützkräften vollständig oder zumindest weitgehend befreit ist, unterliegt die Dichtfläche nur einem geringen Verschleiß, so dass über einen langen Betriebszeitraum Dichtigkeit gewährleistet ist.

Es genügt grundsätzlich, dass das Dichtungselement nur an der Seitenfläche des Stützkragens, die die Dichtfläche für das Gehäusebauteil, gegen welches abzudichten ist, bildet, angeordnet ist. Es kann zweckmäßig sein, dass die Abstützfläche an der Stirnseite des Stützkragens entweder frei von Dichtungsmaterial des Dichtungselements oder von Dichtungsmaterial geringerer Dicke bzw. Wandstärke als an der Dichtfläche bedeckt ist.

Die geringere Wandstärke des Dichtungsmaterials an der Abstützfläche an der Stirnseite des Stützkragens führt zu einer präziseren axialen Kraftübertragung zwischen dem Gehäusebauteil und dem Stützkragen.

Gemäß einer weiteren zweckmäßigen Ausführung ist der Stützkragen von dem Dichtungsmaterial des Dichtungselements umspritzt bzw. wird das Dichtungsmaterial auf den Stützkragen aufgeschäumt. Hierdurch ist eine feste Verbindung zwischen dem Dichtungsmaterial des Dichtungselements und dem Stützkragen gewährleistet. Das Dichtungsmaterial bildet vorzugsweise gleichzeitig eine die Stirnseite des Filtermediumkörpers abdichtende Endscheibe.

Gemäß einer weiteren vorteilhaften Ausführung befindet sich an beiden Seitenflächen, d.h. an der nach radial innen und der nach radial außen weisenden Seitenfläche des Stützkragens Dichtungsmaterial des Dichtungselements. Vorteilhafterweise ist der Stützkragen zumindest in seinen axial überstehenden Abschnitten vollständig von dem Material des Dichtungselementes eingehüllt.

Gemäß einer weiteren zweckmäßigen Ausführung weist der Stützkragen eine Gitterstruktur mit Gitteröffnungen auf, die zur Aufnahme des Dichtungsmaterials dienen. In die Gitteröffnungen der Gitterstruktur kann beim Aufbringen des Dichtungselements das Dichtungsmaterial einfließen bzw. eindringen, wodurch eine feste Verbindung zwischen Dichtungselement und Stützkragen hergestellt werden kann. Darüber hinaus führt die Gitterstruktur zu einer Verbesserung der Stabilität des Stützkragens, so dass der Stützkragen in der Lage ist, ohne oder ohne wesentliche Verformung die axialen Stützkräfte aufzunehmen.

Gemäß noch einer weiteren zweckmäßigen Ausführung weist der Stützkragen benachbart zu der Endscheibe am Filtermediumkörper eine umlaufende Stützstrebe auf, die axial in einer Flucht mit der Stirnseite des Stützkragens liegt. Diese umlaufende Stützstrebe, die entweder auf dem Filtermediumkörper aufliegt oder in unmittelbarer Nachbarschaft zum Filtermediumkörper liegt, verbessert in signifikanter Weise die Stabilität des Stützkragens.

Der Stützkragen setzt sich aus einem Radialabschnitt und einem Axialabschnitt zusammen. Der Radialabschnitt ist mit dem Mittelrohr verbunden, insbesondere am radial innen liegenden Rand, wobei der axiale Abschnitt an dem radial außen liegenden Rand des radialen Abschnitts angeordnet ist. Der Radialabschnitt und der Axialabschnitt bilden gemeinsam eine Ringschulter, die vorteilhafterweise zumindest an ihrer Außenseite vollständig von dem Dichtungsmaterial bedeckt ist. Es kann zweckmäßig sein, dass die Stützstrebe, welche axial in der Flucht mit der Stirnseite des Stützkragens liegt, sich im Übergang zwischen Radialabschnitt und Axialabschnitt befindet.

Gemäß einer weiteren zweckmäßigen Ausführung sind sowohl der Axialabschnitt als auch der Radialabschnitt des Stützkragens jeweils mit einer Gitterstruktur versehen. In einer alternativen Ausführung weist nur einer dieser Abschnitte eine Gitterstruktur auf, wohingegen der andere Abschnitt Umfangsstreben und Radialstreben bzw. Axialstreben, jedoch mit einem größeren Abstand zueinander aufweist.

Alternativ zu der Ausführung des Stützkragens als umlaufende Schulter mit Radialabschnitt und Axialabschnitt kann es auch zweckmäßig sein, lediglich einen Axialabschnitt am Stützkragen vorzusehen, der die axiale Verlängerung des Mittelrohrs bildet.

Erfindungsgemäß ist der Stützkragen einteilig mit dem Mittelrohr ausgebildet. Mittelrohr und Stützkragen sind insbesondere als Kunststoff-Spritzgussbauteil ausgebildet. In einer alternativen Ausführung bilden der Stützkragen und das Mittelrohr separate Bauteile, die jedoch miteinander verbunden sind, um eine feste Positionierung des Stützkragens am Mittelrohr und eine Überleitung der axialen Stützkräfte vom Stützkragen auf das Mittelrohr zu gewährleisten.

Gemäß noch einer weiteren zweckmäßigen Ausführung liegt das Dichtungselement bzw. ein Teil des Dichtungselements unmittelbar auf der Stirnseite des Filtermediumkörpers auf und bildet eine Endscheibe aus. Alternativ kann eine separat ausgebildete Endscheibe vorgesehen sein, welche den Filtermediumkörper stirnseitig bedeckt. Das Dichtungselement liegt dann vorteilhaft unmittelbar auf der Endscheibe auf. Hierbei kommen zum einen Ausführungen in Betracht, bei denen der Stützkragen auch auf seiner der Endscheibe zugewandten Seite von dem Dichtungsmaterial umhüllt ist, als auch Ausführungen, bei denen zusätzliches Dichtungsmaterial über den Stützkragen hinaus unmittelbar auf der Endscheibe aufliegt.

Die radial innen liegende Seitenfläche des Stützkragens bildet die Dichtfläche, an der ein Abschnitt des Gehäusebauteils dichtend anliegt. Es ist aber auch möglich, dass zusätzlich die radial außen liegende Seitenfläche des Stützkragens die Dichtfläche bildet.

Das Gehäusebauteil des Filtergehäuses zum Anbringen des Filterelements ist beispielsweise als Anschlussstutzen ausgeführt, auf welchen ein Gehäusetopf zur Aufnahme des Filterelements aufsetzbar ist. An dem Gehäusebauteil befindet sich beispielsweise auf der dem Filterelement zugewandten Seite eine Aufnahmenut mit zwei konzentrischen, radial die Aufnahmenut begrenzenden Seitenwänden, von denen mindestens eine Seitenwand an der Dichtfläche des Stützkragens dichtend anliegt.

Zur Übertragung der axialen Stützkräfte von dem Gehäusebauteil auf das Filterelement kann es zweckmäßig sein, am Gehäusebauteil einen dem Filterelement zugewandten Axialstutzen anzuordnen, der im montierten Zustand an der Stirnseite des Stützkragens anliegt und sich dort axial abstützt. In der Ausführung des Gehäusebauteils mit der Aufnahmenut befindet sich der Axialstutzen innerhalb der Aufnahmenut.

Der Axialstutzen weist vorteilhafterweise eine geringere axiale Erstreckung an dem Gehäusebauteil auf als eine Dichtwand, die an der Dichtfläche des Stützkragens anliegt. Im Falle einer Aufnahmenut an dem Gehäusebauteil ist die Dichtwand von einer die Aufnahmenut radial begrenzenden Seitenwand des Gehäusebauteils gebildet.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 in perspektivischer Darstellung ein ringförmiges Filterelement, das an der Innenseite des Filtermediumkörpers ein Mittelrohr aufweist, mit dem ein axial überragender Stützkragen einteilig ausgebildet ist,
Fig. 2 eine Filtereinrichtung mit dem Filterelement aus Fig. 1 im eingesetzten Zustand in einem aufnehmenden Filtergehäuse mit einem Anschlussstutzen,
Fig. 3 eine Fig. 2 entsprechende Darstellung, jedoch im montierten Zustand, wobei der Stützkragen am Filterelement am Anschlussstutzen anliegt.

In den Figuren sind gleiche Bauteile mit gleichen Bezugszeichen versehen.

### Ausführungsform(en) der Erfindung

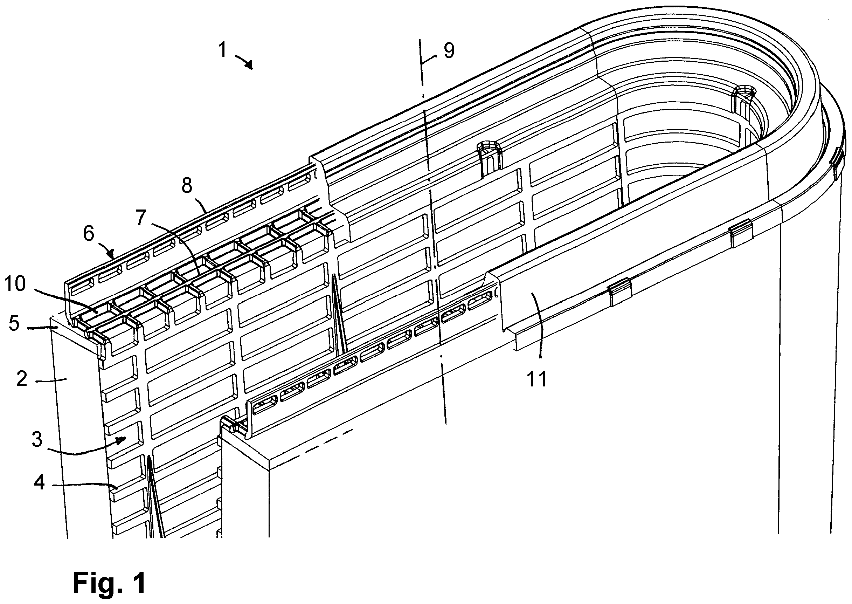

In Fig. 1 ist ein Filterelement 1 dargestellt, das zur Gasfiltration, beispielsweise für einen Luftfilter einer Brennkraftmaschine eingesetzt werden kann. Das Filterelement 1 ist ringförmig ausgebildet und besitzt im Ausführungsbeispiel einen stark langgestreckten, ovalen Querschnitt mit Längsseiten, die geradlinig oder nur mit geringer Krümmung nach außen ausgebildet sind. Das Filterelement 1 weist einen ringförmigen Filtermediumkörper 2 auf, an dem die Filtration des zu reinigenden Fluids stattfindet. Der Filtermediumkörper 2 wird radial von außen nach innen von dem Fluid durchströmt, so dass der Innenraum im Filtermediumkörper 2 die Reinseite bildet, aus der das gereinigte Fluid axial abgeführt wird. Der Innenraum 3 ist von einem ein Stützgitter bildenden Mittelrohr 4 ausgekleidet, das an der Innenseite des Filtermediumkörpers 2 anliegt und vorzugsweise als Kunststoff-Spritzgussbauteil ausgeführt ist. Zumindest an einer Stirnseite, vorzugsweise an beiden gegenüberliegenden Stirnseiten, ist der Filtermediumkörper 2 von einer Endscheibe 5, die strömungsdicht ausgeführt ist, abgedeckt.

Einteilig mit dem Mittelrohr 4 ist ein Stützkragen 6 ausgebildet, der axial über die Stirnseite des Filtermediumkörpers 2 übersteht, wobei die Achsrichtung mit der Längsachse 9 des Filterelements 1 zusammenfällt. Der Stützkragen 6 weist einen Radialabschnitt 7 und einen Axialabschnitt 8 auf, die einteilig ausgebildet sind. Der Radialabschnitt 7 ist an der radial innen liegenden Seite - dem Innenraum 3 zugewandt - mit dem Mittelrohr 4 verbunden. An der radial außen liegenden Seite des Radialabschnitts 7 erstreckt sich der Axialabschnitt 8. Somit befindet sich der Axialabschnitt 8 radial auf Distanz zum Mittelrohr 4. In Radialrichtung befindet sich der Axialabschnitt jedoch noch innerhalb des Außenradius von Filtermediumkörper 2 und Endscheibe 5.

Sowohl der Radialabschnitt 7 als auch der Axialabschnitt 8 des Stützkragens 6 sind mit einer Gitterstruktur versehen, die eine Vielzahl von Ausnehmungen aufweist. Diese Ausnehmungen in dem Radial- und Axialabschnitt 7, 8 dienen zur Aufnahme von Dichtungsmaterial eines Dichtungselements 11, das sich auf dem Stützkragen 6 befindet. Das Dichtungselement 11 wird auf den Stützkragen 6 aufgespritzt bzw. aufgeschäumt; das Dichtungsmaterial ist beispielsweise ein PU-Schaum. Indem das Dichtungsmaterial in die Ausnehmungen der Gitterstruktur in dem Radialabschnitt 7 und dem Axialabschnitt 8 eindringt, ist eine feste, unlösbare Verbindung zwischen dem Dichtungselement 11 und dem Stützkragen 6 gewährleistet. Der Stützkragen 6 ist vorteilhafterweise nach außen vollständig von dem Dichtungsmaterial des Dichtungselements 11 umhüllt. Das Dichtungsmaterial deckt die Stirnseite des Filtermediumkörpers 2 ab und bildet die Endscheibe 5 aus. Der Stützkragen 6 ist in die Endscheibe 5 eingebettet.

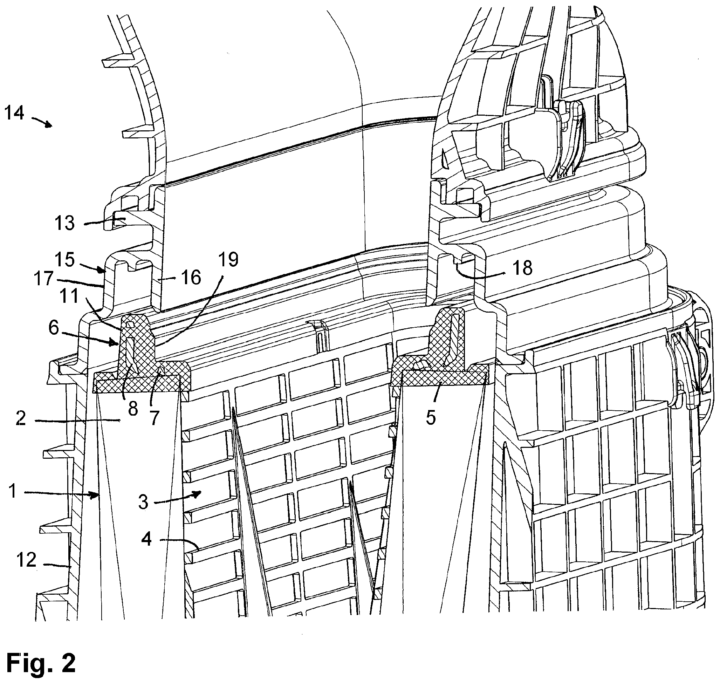

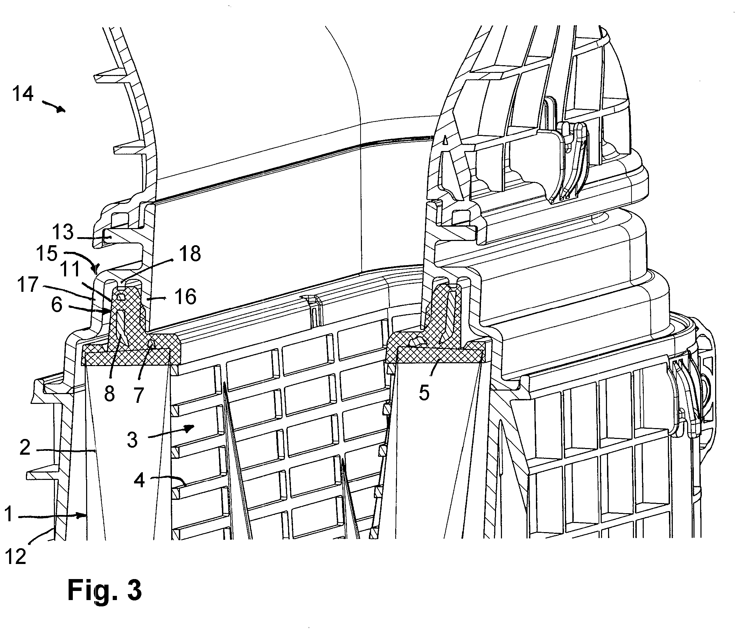

In den Fig. 2 und 3 ist eine Filtereinrichtung 14, insbesondere zur Gasfiltration, mit dem Filterelement 1 in einem Filtergehäuse dargestellt, das ein Filtergrundgehäuse 12 zur Aufnahme des Filterelements 1 und ein mit dem Filtergrundgehäuse 12 verbindbares Gehäusebauteil 13 umfasst. Das Gehäusebauteil 13 bildet beispielsweise einen Auslassstutzen für das Reinfluid. Das Filterelement 1 ist auf den Auslassstutzen aufsetzbar. Das Filtergrundgehäuse kann im nicht dargestellten Endbereich, welcher dem Auslassstutzen abgewandt ist, geschlossen ausgeführt oder mit einem Deckel verbindbar sein, so dass ein geschlossenes Filtergehäuse ausgebildet ist. Zur Verdeutlichung sind in Fig. 2 die Bauelemente der Filtereinrichtung 14 teilweise in Explosionsdarstellung gezeigt, wohingegen Fig. 3 die eingebaute Position darstellt.

Das Dichtungselement 11 an dem Stützkragen 6 liegt auf der oben liegenden Stirnseite des Filtermediumkörpers 2 auf und übergreift einen Endbereich des Filtermediumkörpers radial innen und außen. Die oben liegende Stirnseite des Axialabschnitts 8 bildet eine axiale Abstützfläche für den Auslassstutzen 13. Im Bereich der oben liegenden Stirnseite befindet sich nur Dichtungsmaterial geringer Stärke des Dichtungselements 11, ebenso an der radialen Außenseite des Axialabschnitts 8 des Stützkragens 6. Dagegen ist an der radial innen liegenden Seitenfläche des Axialabschnitts 8 des Stützkragens 6 Dichtungsmaterial mit signifikant größerer Wandstärke angeordnet. Diese Seitenfläche des Axialabschnitts 8 bildet eine radiale Dichtfläche für den Auslassstutzen 13.

Am Auslassstutzen 13 befindet sich eine Aufnahmenut 15, die in Radialrichtung von Seitenwänden 16 und 17 begrenzt ist, welche radial auf Abstand und konzentrisch zueinander verlaufen. Am innenliegenden Boden der Aufnahmenut 15 ist ein Axialstutzen 18 angeformt, der sich in Radialrichtung in der Mitte der Aufnahmenut 15 befindet. Die axiale Erstreckung des Axialstutzens 18 ist deutlich geringer als die axiale Erstreckung der die Aufnahmenut begrenzenden Seitenwände 16 und 17. Im montierten Zustand gem. Fig. 3 liegt der Axialstutzen 18 an der Stirnseite des Axialabschnitts 8 des Stützkragens 6 an und übt eine Axialkraft auf den Stützkragen aus, die vom Axialabschnitt 8 über den Radialabschnitt 7 in das Mittelrohr 4 eingeleitet wird. Da sich an der axialen Stirnseite des Axialabschnitts 8 nur wenig Dichtungsmaterial befindet, ist eine präzise Kraftübertragung der axialen Kräfte von dem Auslassstutzen 13 auf den Stützkragen 6 sichergestellt.

An der radial innen liegenden Dichtfläche des Stützkragens 6, an der Dichtungsmaterial mit größerer Wandstärke angeordnet ist, liegt im zusammengebauten Zustand die innen liegende Seitenwand 16 der Aufnahmenut 15 des Auslassstutzens 13 an. Aufgrund des Abstandes sowohl in Achsrichtung als auch in Radialrichtung zwischen der Axialnut 18 und der Seitenwand 16, insbesondere dem Teil an der Innenseite der Seitenwand 16, der in Kontakt mit der Dichtfläche 19 liegt, ist eine Entkopplung von axialer Abstützung und radialer Dichtung sichergestellt.

## Patentansprüche

1. Filtereinrichtung, insbesondere Gasfilter, beispielsweise Luftfilter, mit
- einem ringförmigen Filterelement (1) mit einem Filtermediumkörper (2), der in Radialrichtung von dem zu reinigenden Fluid durchströmbar ist, und mit einem Mittelrohr (4) an der Innenseite des Filtermediumkörpers (2), wobei mit dem Mittelrohr (4) ein Stützkragen (6) verbunden ist, der Träger eines Dichtungselements (11) ist, und die Stirnseite des Stützkragens (6) eine axiale Abstützfläche für ein Gehäusebauteil (13) bildet, wobei eine radiale Seitenfläche des Stützkragens (6), die Träger des Dichtungselements (11) ist, eine zur axialen Abstützfläche beabstandete Dichtfläche (19) für ein Gehäusebauteil (13) bildet, und wobei der Stützkragen (6) einteilig mit dem Mittelrohr (4) ausgebildet ist und
- mit einem Filtergehäuse zur Aufnahme des Filterelements (1),
- wobei das Filterelement (1) derart in das Filtergehäuse einsetzbar ist, dass sich das Filterelement (1) mit der Stirnseite des Stützkragens (6) an dem Gehäusebauteil (13) abstützt und
- wobei an der radial innen liegenden Seitenfläche des Stützkragens (6) das Gehäusebauteil (13) dichtend anliegt,
**dadurch gekennzeichnet, dass**
der Stützkragen (6) einen Radialabschnitt (7) und einen Axialabschnitt (8) aufweist, wobei der Radialabschnitt (7) mit dem Mittelrohr (4) verbunden ist, und wobei an dem Axialabschnitt (8) die axiale Abstützfläche und die radiale Seitenfläche des Stützkragens (6) ausgebildet sind.

2. Filtereinrichtung nach Anspruch 1, **dadurch gekennzeichnet, dass** der Stützkragen (6) eine Gitterstruktur mit Gitteröffnungen zur Aufnahme des Dichtungsmaterials des Dichtungselements (11) aufweist.

3. Filtereinrichtung nach Anspruch 1 oder 2, **dadurch gekennzeichnet, dass** der Stützkragen (6) benachbart zu einer Stirnseite des Filtermediumkörpers (2) eine umlaufende Stützstrebe (10) aufweist, die axial in einer Flucht mit der Stirnseite des Stützkragens (6) liegt.

4. Filtereinrichtung nach Anspruch 1, **dadurch gekennzeichnet, dass** sowohl der Radialabschnitt (7) als auch der Axialabschnitt (8) eine Gitterstruktur mit Gitteröffnungen aufweisen.

5. Filtereinrichtung nach Anspruch 3 oder 4, **dadurch gekennzeichnet, dass** die axial in einer Flucht mit der Stirnseite liegende Stützstrebe (10) im Übergang zwischen Radialabschnitt (7) und Axialabschnitt (8) des Stützkragens (6) angeordnet ist.

6. Filtereinrichtung nach einem der Ansprüche 1 bis 5, **dadurch gekennzeichnet, dass** zumindest der Axialabschnitt (8) des Stützkragens (6) vollständig vom Dichtungsmaterial des Dichtungselements (11) umhüllt ist.

7. Filtereinrichtung nach Anspruch 6, **dadurch gekennzeichnet, dass** das Dichtungselement (11) an der Stirnseite des Stützkragens (6) eine geringere Dicke aufweist als an der Seitenfläche.

8. Filtereinrichtung nach einem der Ansprüche 1 bis 7, **dadurch gekennzeichnet, dass** am Gehäusebauteil (13) ein dem Filterelement (1) zugewandter Axialstutzen (18) angeordnet ist, der sich an der Stirnseite des Stützkragens (6) abstützt.

9. Filtereinrichtung nach einem der Ansprüche 1 bis 8, **dadurch gekennzeichnet, dass** am Gehäusebauteil (13) eine Aufnahmenut (15) mit radial begrenzenden Seitenwänden (16, 17) angeordnet ist und die Aufnahmenut (15) den Stützkragen (6) übergreift.

10. Filtereinrichtung nach einem der Ansprüche 1 bis 9, **dadurch gekennzeichnet, dass** eine Seitenwand (16, 17) des Gehäusebauteils (13) radial dichtend an einer Seitenfläche des Stützkragens (6) anliegt und die Stirnseite der Seitenwand (16, 17) des Gehäusebauteils (13) axial auf Abstand zum Stützkragen (6) liegt.

11. Verwendung eines ringförmigen Filterelements,
- mit einem Filtermediumkörper (2), der in Radialrichtung von dem zu reinigenden Fluid durchströmbar ist,
- und mit einem Mittelrohr (4) an der Innenseite des Filtermediumkörpers (2),
- wobei mit dem Mittelrohr (4) ein Stützkragen (6) verbunden ist, der Träger eines Dichtungselements (11) ist, und die Stirnseite des Stützkragens (6) eine axiale Abstützfläche für ein Gehäusebauteil (13) bildet,
- und wobei eine radiale Seitenfläche des Stützkragens (6), die Träger des Dichtungselements (11) ist, eine zur axialen Abstützfläche beabstandete Dichtfläche (19) für das Gehäusebauteil (13) bildet,
- und wobei der Stützkragen (6) einteilig mit dem Mittelrohr (4) ausgebildet ist,
- wobei das Filterelement (1) derart in das Filtergehäuse einsetzbar ist, dass sich das Filterelement (1) mit der Stirnseite des Stützkragens (6) an dem Gehäusebauteil (13) abstützt und
- wobei an der radial innen liegenden Seitenfläche des Stützkragens (6) das Gehäusebauteil (13) dichtend anliegt,
- wobei ferner der Stützkragen (6) einen Radialabschnitt (7) und einen Axialabschnitt (8) aufweist, und wobei der Radialabschnitt (7) mit dem Mittelrohr (4) verbunden ist, und wobei an dem Axialabschnitt (8) die axiale Abstützfläche und die radiale Seitenfläche des Stützkragens (6) ausgebildet sind in einer Filtereinrichtung nach einem der Ansprüche 1 bis 10.

## Claims

1. Filtering device, in particular gas filter, for example air filter, with
- an annular filter element (1) with a filter medium body (2) capable of being flowed through in the radial direction by the fluid to be cleaned, and with a central tube (4) on the interior side of the filter medium body (2), wherein a support collar (6) connected to the central tube (4) is the carrier of a sealing element (11), and the front face of the support collar (6) forms an axial bearing surface for a housing component (13), wherein a radial side surface of the support collar (6) is the carrier of the sealing element (11) and forms a sealing surface (19) for a housing component (13) spaced apart from the axial bearing surface, and wherein the support collar (6) is designed in one piece with the central tube (4) and
- with a filter housing for receiving the filter element (1),
- wherein the filter element (1) can be inserted into the filter housing in such a way that the filter element (1) rests with the front face of the support collar (6) on the housing component (13) and
- wherein the housing component (13) sealingly abuts against the radially inner side surface of the support collar (6),
**characterized in that**
the support collar (6) features a radial section (7) and an axial section (8), wherein the radial section (7) is connected to the central tube (4), and wherein the axial bearing surface and the radial side surface of the support collar (6) are realized on the axial section (8).

2. Filtering device according to claim 1, **characterized in that** the support collar (6) features a grid structure with grid openings for receiving the sealing compound of the sealing element (11).

3. Filtering device according to claim 1 or 2, **characterized in that** the support collar (6), adjacent to a front face of the filter medium body (2), features a circumferential support strut (10) axially aligned with the front face of the support collar (6).

4. Filtering device according to claim 1, **characterized in that** both the radial section (7) and the axial section (8) feature a grid structure with grid openings.

5. Filtering device according to claim 3 or 4, **characterized in that** the support strut (10) axially aligned with the front face is disposed in the transition between radial section (7) and axial section (8) of the support collar (6).

6. Filtering device according to one of the claims 1 to 5, **characterized in that** at least the axial section (8) of the support collar (6) is completely enveloped by the sealing compound of the sealing element (11).

7. Filtering device according to claim 6, **characterized in that** the sealing element (11) features a smaller thickness on the front face of the support collar (6) than on the side surface.

8. Filtering device according to one of the claims 1 to 7, **characterized in that** an axial nozzle (18) facing the filter element (1) and resting on the front face of the support collar (6) is disposed on the housing component (13).

9. Filtering device according to one of the claims 1 to 8, **characterized in that** a receiving groove (15) with radially defining sidewalls (16, 17) is disposed on the housing component (13) and the receiving groove (15) overlaps the support collar (6).

10. Filtering device according to one of the claims 1 to 9, **characterized in that** a sidewall (16, 17) of the housing component (13) rests radially sealingly on a side surface of the support collar (6) and the front face of the sidewall (16, 17) of the housing component (13) is located axially spaced apart from the support collar (6).

11. Use of an annular filter element,
- with a filter medium body (2) capable of being flowed through in the radial direction by the fluid to be cleaned,
- and with a central tube (4) on the interior side of the filter medium body (2),
- wherein a support collar (6) connected to the central tube (4) is the carrier of a sealing element (11), and the front face of the support collar (6) forms an axial bearing surface for a housing component (13),
- and wherein a radial side surface of the support collar (6) is the carrier of the sealing element (11) and forms a sealing surface (19) for the housing component (13) spaced apart from the axial bearing surface,
- and wherein the support collar (6) is designed in one piece with the central tube (4),
- wherein the filter element (1) can be inserted into the filter housing in such a way that the filter element (1) rests with the front face of the support collar (6) on the housing component (13) and
- wherein the housing component (13) sealingly abuts against the radially inner side surface of the support collar (6),
- wherein furthermore the support collar (6) features a radial section (7) and an axial section (8), and wherein the radial section (7) is connected to the central tube (4),
- and wherein the axial bearing surface and the radial side surface of the support collar (6) are realized on the axial section (8) in a filtering device according to one of the claims 1 to 10.

## Revendications

1. Dispositif de filtration, notamment filtre à gaz, par exemple filtre à air, avec
- un élément filtrant annulaire (1) avec un corps de milieu filtrant (2) pouvant être parcouru en sens radial par le fluide à nettoyer, et avec un tube central (4) sur la face intérieure du corps de milieu filtrant (2), dans lequel un collet d'appui (6), qui supporte un élément d'étanchéité (11), est relié au tube central (4), et la face frontale du collet d'appui (6) forme une surface d'appui axiale pour un composant de boîtier (13), dans lequel une face latérale du collet d'appui (6) supportant l'élément d'étanchéité (11) forme une surface d'étanchéité (19) pour un composant de boîtier (13) espacée de la surface d'appui axiale, et dans lequel le collet d'appui (6) est réalisé d'un seul tenant avec le tube central (4) et
- avec un boîtier de filtre pour recevoir l'élément filtrant (1),
- dans lequel l'élément filtrant (1) peut être inséré dans le boîtier de filtre de telle manière que l'élément filtrant (1) repose avec la face frontale du collet d'appui (6) sur le composant de boîtier (13) et
- dans lequel le composant de boîtier (13) s'appuie de manière étanche contre la face latérale disposée radialement intérieure du collet d'appui (6),
**caractérisé en ce que**
le collet d'appui (6) présente une section radiale (7) et une section axiale (8), dans lequel la section radiale (7) est reliée au tube central (4), et dans lequel la surface d'appui axiale et la face latérale radiale du collet d'appui (6) sont réalisées sur la section axiale (8).

2. Dispositif de filtration selon la revendication 1, **caractérisé en ce que** le collet d'appui (6) présente une structure réticulaire avec des ouvertures de grille pour recevoir le matériau d'étanchéité de l'élément d'étanchéité (11).

3. Dispositif de filtration selon la revendication 1 ou 2, **caractérisé en ce que** le collet d'appui (6) adjacent à une face frontale du corps de milieu filtrant (2) présente une entretoise de support périphérique (10) qui se trouve axialement en alignement avec la face frontale du collet d'appui (6).

4. Dispositif de filtration selon la revendication 1, **caractérisé en ce qu'**aussi bien la section radiale (7) que la section axiale (8) présentent une structure réticulaire avec des ouvertures de grille.

5. Dispositif de filtration selon la revendication 3 ou 4, **caractérisé en ce que** l'entretoise de support (10) se trouvant axialement en alignement avec la face frontale est disposée dans la transition entre la section radiale (7) et la section axiale (8) du collet d'appui (6).

6. Dispositif de filtration selon l'une quelconque des revendications 1 à 5, **caractérisé en ce qu'**au moins la section axiale (8) du collet d'appui (6) est complètement enrobée par le matériau d'étanchéité de l'élément d'étanchéité (11).

7. Dispositif de filtration selon la revendication 6, **caractérisé en ce que** l'élément d'étanchéité (11) présente au niveau de la face frontale du collet d'appui (6) une épaisseur plus réduite qu'au niveau de la face latérale.

8. Dispositif de filtration selon l'une quelconque des revendications 1 à 7, **caractérisé en ce qu'**une pièce de raccordement axiale (18) tournée vers l'élément filtrant (1) et s'appuyant sur la face frontale du collet d'appui (6) est disposée sur la pièce de boîtier (13).

9. Dispositif de filtration selon l'une quelconque des revendications 1 à 8, **caractérisé en ce qu'**une rainure de réception (15) avec des parois latérales (16, 17) délimitant radialement est disposée sur le composant de boîtier (13) et la rainure de réception (15) recouvre le collet d'appui (6).

10. Dispositif de filtration selon l'une quelconque des revendications 1 à 9, **caractérisé en ce qu'**une paroi latérale (16, 17) du composant de boîtier (13) s'appuie de manière radialement étanche sur une face latérale du collet d'appui (6) et la face frontale de la paroi latérale (16, 17) du composant de boîtier (13) se trouve à distance axiale du collet d'appui (6).

11. Utilisation d'un élément filtrant annulaire,
- avec un corps de milieu filtrant (2) pouvant être parcouru dans le sens radial par le fluide à nettoyer,
- et avec un tube central (4) sur la face intérieure du corps de milieu filtrant (2),
- dans lequel un collet d'appui (6), qui supporte un élément d'étanchéité (11), est relié au tube central (4), et la face frontale du collet d'appui (6) forme une surface d'appui axiale pour un composant de boîtier (13),
- et dans lequel une face latérale radiale du collet d'appui (6) supportant l'élément d'étanchéité (11) forme une surface d'étanchéité (19) pour le composant de boîtier (13) espacée de la surface de support axiale,
- et dans lequel le collet d'appui (6) est réalisé d'un seul tenant avec le tube central (4).
- dans lequel l'élément filtrant (1) peut être inséré dans le boîtier de filtre de telle manière que l'élément filtrant (1) repose avec la face frontale du collet d'appui (6) sur le composant de boîtier (13) et
- dans lequel le composant de boîtier (13) s'appuie de manière étanche contre la face latérale disposée radialement intérieure du collet d'appui (6),
- dans lequel le collet d'appui (6) présente d'ailleurs une section radiale (7) et une section axiale (8), et dans lequel la section radiale (7) est reliée au tube central (4),
- et dans lequel la surface d'appui axiale et la face latérale radiale du collet d'appui (6) sont réalisées sur la section axiale (8) dans un dispositif de filtration selon l'une quelconque des revendications 1 à 10.
